# EUROPÄISCHE PATENTSCHRIFT

(11) **EP 2 187 790 B1**
(45) Veröffentlichungstag und Bekanntmachung des Hinweises auf die Patenterteilung: **06.05.2015**
(21) Anmeldenummer: 08786616.6
(22) Anmeldetag: 30.07.2008
(51) Int. Cl.: A47J 43/06, A47J 43/08

(54) **SYSTEM ZUM LAGERN DER ANTRIEBSWELLE EINER KÜCHENMASCHINE**
SYSTEM FOR STORING THE DRIVE SHAFT OF A FOOD PROCESSOR
SYSTÈME POUR LE MONTAGE DE L'ARBRE D'ENTRAÎNEMENT D'UN ROBOT MÉNAGER

(30) Priorität: 14.08.2007 DE 102007038371
(43) Veröffentlichungstag der Anmeldung: 26.05.2010
(73) Patentinhaber: BSH Hausgeräte GmbH, 81739 München (DE)
(72) Erfinder: PESEC, Jurij, 3301 Petrovce (SI); SABEC, Roman, 3327 Smartno (SI); OBLAK, Aleksander, 3332 Recica ob Savinji (SI)
(86) Internationale Anmeldenummer: PCT/EP2008/059982
(87) Internationale Veröffentlichungsnummer: WO 2009/021845

(56) Entgegenhaltungen:
- FR-A- 2 569 970

## Beschreibung

### Hintergrund der Erfindung

Die vorliegende Erfindung betrifft ein System zum alternativen Lagern einer ersten oder einer zweiten Antriebswelle zum rotierenden Antreiben eines Bearbeitungswerkzeugs einer Küchenmaschine gemäß dem Oberbegriff des Anspruchs 1.

### Stand der Technik

Aus dem Stand der Technik sind zahlreiche Typen von Küchenmaschinen bekannt, bei denen eine Antriebswelle von außen durch eine Durchführung in einen Zubereitungsbehälter hineinragt, wo sie ein Bearbeitungsgerät, zum Beispiel Knethaken, rotierend antreibt. Beispielsweise offenbart die deutsche Offenlegungsschrift DE 1 891 126 A1 eine Rührschüssel, die eine sich von dem Boden der Rührschüssel nach oben erstreckende zentrale Säule aufweist, in deren Mitte sich die Antriebswelle befindet. Der aus der Säule herausragende Wellenkopf ist mit einem Vierkant versehen, auf den ein Rührwerk aufgesetzt werden kann. Zur drehbaren Lagerung der Antriebswelle in der Säule ist eine mit der Säule lösbar verschraubbare Mutter vorgesehen. Mittels eines Federrings ist die Welle innerhalb der Mutter auch gegen axiale Verschiebung gesichert. Die Mutter ist von Hand bequem erfassbar, so dass die Achse von der Säule und damit von der Rührschüssel etwa zu Reinigungszwecken gelöst werden kann. Eine weitere Küchenmaschine ist beispielsweise auch in der FR-A-2 569 970 offenbart.

Bei Küchenmaschinen verwendet man je nach Einsatzbereich unterschiedliche Typen von Antriebswellen. So werden beispielsweise häufig Antriebswellen aus Metall bevorzugt, wenn ein großes Moment auf das Bearbeitungswerkzeug übertragen werden soll. Wenn nur kleinere Momente übertragen werden sollen, werden hingegen häufig Hohlwellen aus Kunststoff eingesetzt. Die verschiedenen Wellen müssen, insbesondere wegen unterschiedlicher Durchmesser, häufig mit unterschiedlichen Mitteln in der Durchführung gelagert werden, so dass es nicht ohne weiteres möglich ist, dieselbe Durchführung mit unterschiedlichen Wellen einzusetzen.

Wenn die Durchführung Teil des Zubereitungsbehälters ist, kann es deshalb erforderlich sein, für jede Welle ein auf diese abgestimmter Zubereitungsbehälter bereitzustellen. Dies kann hohe Kosten bei der Herstellung, der Lagerung und dem Vertrieb der verschiedenen Zubereitungsbehälter nach sich ziehen. Außerdem kann der Nutzwert der Zubereitungsbehälter dadurch herabgesetzt sein, dass der nur mit bestimmten Wellen und damit nur mit bestimmten Küchenmaschinen und Bearbeitungswerkzeugen eingesetzt werden kann.

Die Erfahrung hat außerdem gezeigt, dass Lager für Wellen mit geringem Durchmesser in einer Durchführung im bevorzugten Spritzgussverfahren schwer zu fertigen sind, insbesondere, wenn die Durchführung eine langgestreckte Form, z.B. eine Hohlstutzenform hat, weil der geringe Durchmesser es erschwert, eine ausreichende Kühlung der Spritzgussform sicherzustellen.

### Der Erfindung zugrundeliegende Aufgabe

Der Erfindung liegt die Aufgabe zugrunde, ein verbessertes System bereitzustellen, bei dem in derselben Durchführung unterschiedliche Antriebswellen, insbesondere Antriebswellen mit unterschiedlichen Durchmessern, eingesetzt werden können. Das System soll einfach zu handhaben und einfach und preiswert herzustellen sein.

### Erfindungsgemäße Lösung

Zur Lösung der Aufgabe lehrt die vorliegende Erfindung ein System mit den Merkmalen des Anspruchs 1.

Durch den erfindungsgemäßen Adapter kann erreicht werden, dass die Durchführung so anpassbar ist, dass sie nicht mit einer ersten, sondern auch mit einer zweiten von der ersten unterschiedlichen Antriebswelle verwendet werden kann. Damit kann vermieden werden, dass für unterschiedliche Antriebswellen unterschiedliche Durchführungen hergestellt werden müssen, wodurch sich insbesondere Werkzeugkosten einsparen lassen. Weiterhin können durch die Verwendung des Adapters die bekannten Herstellungsschwierigkeiten bei der Ausbildung eines Lagers mit geringem Durchmessers direkt in der Durchführung vermieden werden.

### Bevorzugte Ausgestaltung der Erfindung

Vorteilhafte Aus- und Weiterbildungen, die einzeln oder in Kombination miteinander eingesetzt werden können, sind Gegenstand der abhängigen Ansprüche.

In einer bevorzugten Ausführung der Erfindung ist die Durchführung ein Hohlstutzen, durch den die erste oder zweite Antriebswelle verlaufen kann. Das erste Lager ist dann vorzugsweise an oder in der Nähe eines Endes des Hohlstutzens angeordnet. Um die erste Antriebswelle möglichst stabil zu lagern, befindet sich das erste Lager in einer bevorzugten Ausführung der Erfindung an dem im Betrieb dem Bearbeitungswerkzeug zugewandten Ende des Hohlstutzens

Der Adapter ist vorzugsweise in das erste Lager einsetzbar. Mit dieser Ausführung der Erfindung ist vorteilhaft erreichbar, dass das zweite Lager in dem gleichen Abschnitt der Durchführung anbringbar ist, in dem sich auch das erste Lager befindet, z.B. an dem im Betrieb dem Bearbeitungswerkzeug zugewandten Ende des Hohlstutzens. So können vorteilhaft beide Antriebswellen an der für ihre Funktion günstigsten Stelle gelagert werden.

In einer bevorzugten Ausführung der Erfindung ist die Durchführung Teil des Zubereitungsbehälters. Mit dieser Ausführung der Erfindung kann vorteilhaft ein Zubereitungsbehälter bereitgestellt werden, der mit mindestens zwei unterschiedlichen Antriebswellen verwendet werden kann. So lässt sich vermeiden, dass für unterschiedliche Antriebswellen unterschiedliche Zubereitungsbehälter hergestellt werden müssen. Weiterhin kann können auf einfache Weise Zubereitungsbehältern mit Lagern für Wellen mit geringem Durchmesser bereitgestellt werden. Die Durchführung ist vorzugsweise in einem Boden des Zubereitungsbehälters angeordnet, besonders vorzugsweise als Hohlstutzen, der vom Boden des Zubereitungsbehälters in den Zubereitungsbehälter hineinragt. Am Ende der bevorzugten Durchführung befindet sich eine Öffnung, durch die der Kopf einer Antriebswelle austreten kann, so dass daran ein Bearbeitungswerkzeug ankuppelbar ist.

Der Zubereitungsbehälter und der Hohlstutzen sind vorzugsweise einstückig ausgeführt, vorzugsweise aus Kunststoff. Sie können aber auch aus zwei Teilen, vorzugsweise aus unterschiedlichen Materialien gebildet sein. So kann zum Beispiel eine Schüssel des Zubereitungsbehälters aus Metall gebildet sein, vorzugsweise aus Stahlblech, zum Beispiel durch Tiefzehen, und die Durchführung aus Kunststoff, vorzugsweise im Spritzgußverfahren. Bei dieser Erfindungsausführung ist in der Schüssel vorzugsweise ein Hohlstutzen ausgebildet, der sich vom Schüsselboden in das Behälterinnere erstreckt und in den die ebenfalls als Hohlstutzen ausgeführte Durchführung eingesetzt werden kann. In diesem Fall kann die Welle vorzugsweise durch eine Öffnung in der Durchführung und eine weitere Öffnung in der Schüssel in letzteres hineinreichen.

Es sind aber auch Ausgestaltungen der Erfindung denkbar, bei dem die Durchführung nicht Teil des Zubereitungsbehälters ist, sondern eines anderen Teils, zum Beispiel eines Deckels des Zubereitungsbehälters, wobei die Antriebswelle dann vorzugsweise durch die Durchführung des Deckels von oben in den Zubereitungsbehälter hineinragt, um dort ein Werkzeug anzutreiben.

Bei einer bevorzugten Ausführung der Erfindung weist die Durchführung auf der Seite, die bei Betrieb dem Bearbeitungswerkzeug zugewandt ist, einen Aufsatz auf, auf dem ein Zahnkranz ausgebildet ist. In dem Zahnkranz kann vorzugsweise ein Zahnrad des Bearbeitungswerkzeugs laufen, um dies beim Rotieren um eine weitere Ache in Rotation zu versetzen. Zahnkranz ist vorzugsweise mit der übrigen Durchführung drehsicher verbunden, z.B. mit einem Schnappverschluss, durch ein Gewinde oder durch Kleben. In einer Ausführung der Erfindung ist das erste Lager einstückig mit dem Aufsatz ausgebildet.

In einer bevorzugten Ausführung der Erfindung ist der Lagerdurchmesser des zweiten Lagers kleiner als der Lagerdurchmesser des ersten Lagers. Auf diese Weise können vorteilhaft Wellen mit unterschiedlichem Durchmesser in der Durchführung gelagert werden. Insbesondere haben Antriebswellen aus Metall typischerweise einen kleineren Durchmesser als Antriebswellen aus Kunststoff, die gewöhnlich als Hohlwellen ausgebildet sind.

Besonders vorzugsweise sind mindestens eines der Lager, vorzugsweise beide Lager, als Radiallager ausgebildet. Auf diese Weise kann vorteilhaft erreicht werden, dass die Welle und damit das Werkzeug stabil um eine feste Rotationsachse rotieren, insbesondere auch wenn Radiale von zuzubereitenden Gut in dem Zubereitungsbehälter verursachte Kräfte auf das Werkzeug und damit auf die Antriebswelle wirken. In einer Ausführung der Erfindung wirken eines der Lager oder beide Lager zusätzlich als Axiallager. Das kann insbesondere dann vorteilhaft sein, wenn auf das Werkzeug und damit auf die Welle bei der Bearbeitung des Guts auch axiale Kräfte wirken. So kann zum Beispiel beim Kneten von Teig eine nach oben gerichtete Kraft auf das Werkzeug ausgeübt werden. Es ist auch denkbar, dass die Durchführung und/oder der Adapter neben einem Radiallager mit einem zusätzlichen Axiallager ausgestattet sind.

Mindestens eines der Lager, vorzugsweise alle Lager, sind als Gleitlager ausgebildet. Die Lager umfassen dazu vorzugsweise eine Gleitlagerbuchse mit einer Gleitfläche in Form eines Hohlzylinders oder Hohlzylinderabschnitts. Die Lagerflächen bestehen vorzugsweise aus Kunststoff. Bevorzugte Lager sind einstückig mit der Durchführung und aus einem mit dieser einheitlichen Material ausgebildet. Besonders vorzugsweise sind Zubereitungsbehälter, Durchführung und erstes Lager einstückig aus einem einheitlichen Material gebildet. Alternativ zu einer Ausführung der Lager als Gleitlager sind auch andere Lagertypen denkbar, zum Beispiel Wälzfager, insbesondere Kugellager, oder Magnetlager.

Antriebswellen, insbesondere solche aus Metall, sind häufig an ihrem Kopf mit radial abstehenden Zapfen ausgestattet, damit eine drehsichere Verbindung zwischen der Welle und dem Kupplungsabschnitt eines Werkzeugs hergestellt werden kann. Deshalb ist vorzugsweise die Lagerfläche mindestens eines der Lager, vorzugsweise des zweiten Lagers, mit einer Nut unterbrochen, die über die gesamte Länge des Lagers (bezogen auf seine Axialrichtung) verläuft, so dass von der Welle abstehende Zapfen durch das Lager hindurchtreten können, wenn die Welle durch das Lager geführt wird. Die bevorzugte Nut verläuft in Axialrichtung des Lagers. Besonders vorzugsweise sind zwei oder mehr Nuten vorgesehen, mindestens gleich der Anzahl der Zapfen der Welle, die durch das Lager geführt werden soll. Die Nuten sind besonders vorzugsweise gleichmäßig voneinander beabstandet.

Der bevorzugte Adapter umfasst zwei Adapterteile, die eine Fixiereinrichtung der Durchführung zwischen sich einschließen können, um den Adapter in der Durchführung zu fixieren. Auf diese Weise kann der bevorzugte Adapter sicher in der Durchführung angebracht werden. Die Fixiereinrichtung ist vorzugsweise ein Kragen, besonders vorzugsweise ein Kragen, der eine Öffnung der Durchführung bildet, durch die die Welle in die Durchführung hinein oder aus ihr heraustritt. Der Adapter wird vorzugsweise durch Verbinden der Adapterteile an der Fixiereinrichtung fixiert. Mit dieser Ausführung der Erfindung ist es insbesondere erreichbar, die Adapterteile in axialer Richtung zu fixieren. In einer bevorzugten Ausführung ist der Adapter auch in radialer Richtung fixiert.

Vorzugsweise ist eines der beiden Adapterteile von einer Seite der Durchführung und der andere von der anderen Seite der Durchführung aus an der Fixiereinrichtung anbringbar, um die Fixiereinrichtung zwischen den Adapterteilen einzuschließen. Dabei greift vorzugsweise das eine der beiden Adapterteile in axialer Richtung der zweiten Antriebswelle gesehen von der einen und der andere von der anderen Seite der Durchführung an der Fixiereinrichtung an.

Die Adapterteile umfassen vorzugsweise Elemente eines Bajonettverschlusses, eines Schraubverschlusses oder eines Schnappverschlusses, um die Adapterteile miteinander zu verbinden. Auf diese Weise ist erreichbar, dass der Adapter ohne Werkzeug an der Durchführung angebracht werden kann. Insbesondere kann so zum Beispiel auch ein Benutzer das System auf einfache Weise die Durchführung für die Verwendung mit einer anderen Antriebswelle umrüsten. Es ist ein erreichbarer Vorteil dieser Ausführung der Erfindung, dass ein Benutzer die gleiche Rührschüssel oder den gleichen Deckel durch Wahl der geeigneten Welle für das von ihm für eine bestimmte Bearbeitung bevorzugte Werkzeug anpassen kann. Dadurch kann er auf ein größeres Auswahl von Werkzeugen zurückgreifen, zum Beispiel sowohl solche Werkzeuge, die wegen eines verhältnismäßig geringen übertragenen Drehmoments im Allgemeinen mit Kunststoffwellen betrieben werden, und solche Werkzeuge, die wegen einer hohen Belastung an der Achse gewöhnlich für Metallwellen vorgesehen sind. Es ist aber zum Beispiel auch denkbar, Adapterteile so auszubilden, dass sie verklebt und/oder mit Schrauben verschraubt werden können.

Ein bevorzugtes System umfasst außerdem eine erste Antriebswelle, die in dem ersten Lager so gelagert werden kann, dass sie durch die Durchführung in den Zubereitungsbehälter hineinragt. Die erste Antriebswelle ist vorzugsweise eine Hohlwelle, besonders vorzugsweise aus Kunststoff. Außerdem umfasst das bevorzugte System eine zweite Antriebswelle, die bei in die Durchführung eingesetztem Adapter so in dem zweiten Lager gelagert werden kann, dass sie durch die Durchführung in den Zubereitungsbehälter hineinragt. Die zweite Antriebswelle ist vorzugsweise aus Metall, besonders vorzugsweise aus Stahl oder Aluminium. Die bevorzugten Wellen weisen einen Wellenkopf auf, an den ein Kupplungsabschnitt eines Bearbeitungswerkzeugs drehsicher angebracht werden kann. An die Wellen können vorzugsweise unterschiedliche Bearbeitungswerkzeuge ankuppelbar sein, zum Beispiel Knethaken, Schneebesen, Mixwerkzeuge, Schneidwerkzeuge oder Reibwerkzeuge.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Fig. 1:: Eine Querschnittsansicht einer ersten Ausführung des erfindungsgemäßen Systems, bei der die Durchführung als hohlstutzenartiger Teil des Bearbeitungsbehälters ausgebildet ist; und
- Fig. 2:: Eine Querschnittsansicht einer weiteren Ausführung der Erfindung, bei der die Durchführung als Hohlstutzen ausgebildet ist, der in eine hohlstutzenartige Ausstülpung der Schüssel des Zubereitungsbehälters einsetzbar ist.

### Ausführliche Beschreibung anhand zweier Ausführungsbeispiele

Bei der nachfolgenden Beschreibung zweier bevorzugter Ausführungsformen der vorliegenden Erfindung bezeichnen gleiche Bezugszeichen gleiche oder vergleichbare Komponenten.

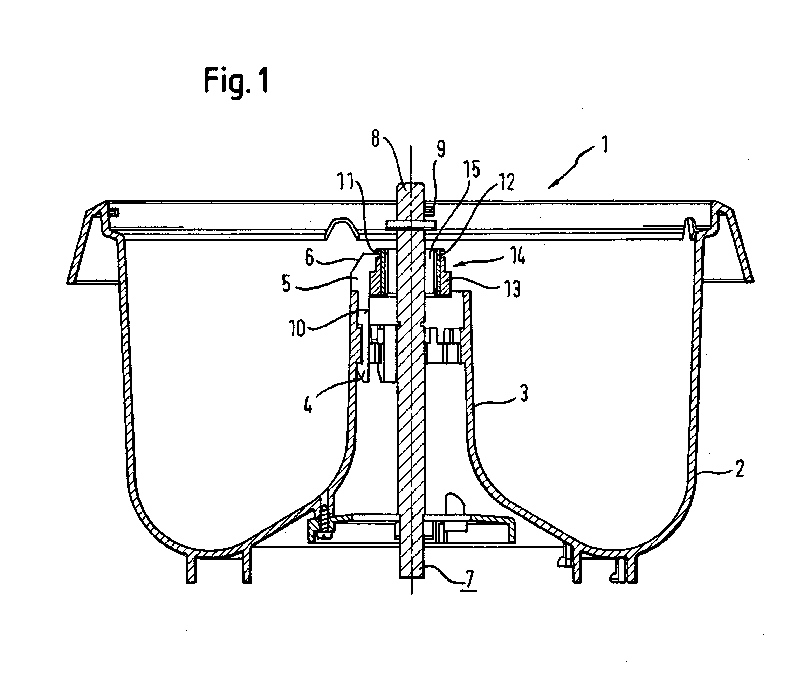

Das System 1 in Figur 1 umfasst einen schüsselförmigen Zubereitungsbehälter 2, von dessen Boden sich eine hohlstutzenförmige Durchführung 3 in das Behälterinnere ausstülpt. Das Ende des Hohlstutzens wird von einem durch Schnappverschlüsse 4 mit dem Rest der Durchführung 3 verbundenen Aufsatz 5 mit Zahnkranz 6 gebildet. In dem Zahnkranz % kann ein Zahnrad (nicht dargestellt) des Bearbeitungswerkzeugs (nicht dargestellt) laufen, um zusammen mit einer Antriebswelle, z.B. der zweiten Antriebswelle 7, einen Teil eines Bearbeitungswerkzeugs in Rotation zu versetzen. Zum Antreiben des Bearbeitungswerkzeugs weist die zweite Antriebswelle 7 einen Wellenkopf 8 auf, aus dem ein Zapfen 9 radial hervorsteht, um eine drehsichere Verbindung mit dem Werkzeug zu gewährleisten.

Die Innenflächen des Aufsatzes 5 der Durchführung 3 bildet eine Zylinderfläche 10, in die eine erste Antriebswelle (nicht dargestellt), vorzugsweise eine Hohlwelle aus Kunststoff, radial gelagert werden kann, wobei die Längsachse der Antriebswelle parallel zur Längsachse der Durchführung 3 verläuft.

Den werkzeugseitigen Abschluss des Aufsatzes bildet eine kragenförmige Fixiereinrichtung 11, die Adapterteile 12 und 13 eines Adapters 14 zwischen sich einschließen, um den Adapter an der Durchführung zu fixieren. Der Adapter besteht aus einem inneren Adapterteil 12 und einem äußeren Adapterteil 13, die ineinander gesteckt und mit Schrauben verschraubt werden können. Das innere Adapterteil weist auf seiner Innenseite eine Hohlzylinderfläche auf, die durch in Längsrichtung der zweiten Antriebwelle 6 verlaufender Nuten 15 unterbrochen ist. Diese Nuten 15 sind dafür vorgesehen, dass die Zapfen 9 der Welle 7 durch den Adapter 14 geführt werden können, wenn die Welle 6 in die Durchführung 3 eingesetzt wird, wie in Figur 1 dargestellt.

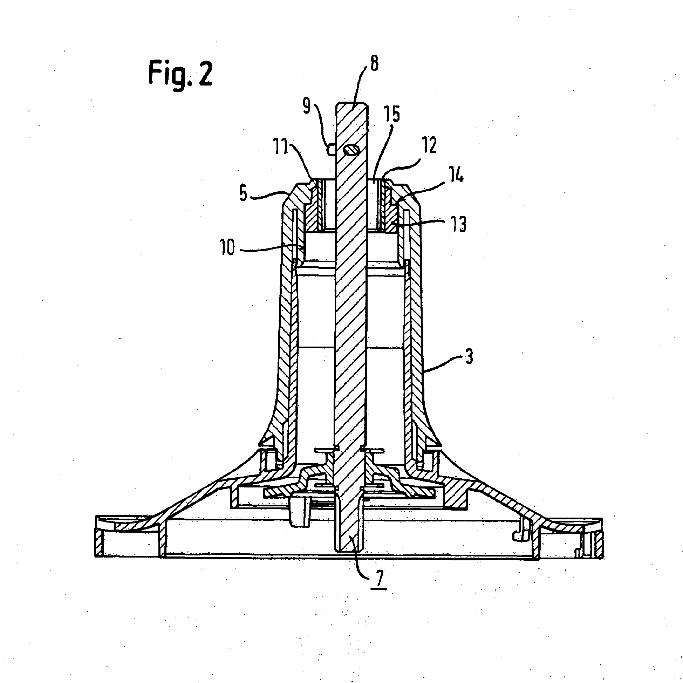

In Figur 2 ist eine alternative Ausführung der Erfindung dargestellt, bei der der Zahnkranz 6 einstückig mit dem Rest der Durchführung 3 ausgebildet ist. Die Durchführung 3 ist in den Hohlstutzen einer ähnlich dem Zubereitungsbehälter 2 ausgebildeten Zubereitungsschüssel (nicht dargestellt) aus Stahl einsetzbar. Wieder bildet die zylindrische Innenfläche 10 des oberen Abschnitts der Durchführung 3, der auf der Außenseite den Zahnkranz 6 trägt, ein Gleitlager für eine erste Antriebswelle mit großem Durchmesser. In dieses Gleitlager ist der Adapter 14 eingesetzt, dessen Innenflächen Lagerflächen für die Welle 7 bilden. Den werkzeugseitigen Abschluss der Durchführung 3 bildet eine kreisförmige Fixiereinrichtung 11, die die Adapterteile 12, 13 zwischen sich einschließen kann, um den Adapter 14 an der Durchführung 3 zu fixieren.

Das erfindungsgemäße System 1 ermöglicht es, alternativ unterschiedliche Antriebswellen 7 in die Durchführung 3 einzusetzen und so z.B. einen Zubereitungsbehälter 2 bereitzustellen, der mit unterschiedlichen Antriebswellen 7 betrieben werden kann.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. System (1) zum alternativen Lagern einer ersten oder einer zweiten Antriebswelle (7) zum rotierenden Antreiben eines Bearbeitungswerkzeugs einer Küchenmaschine, insbesondere zum Zubereiten von Lebensmitteln, mit einer Durchführung (3), durch die die erste oder die zweite Antriebswelle (6) von außen in einen Zubereitungsbehälter (2) der Küchenmaschine hineinragen kann, um das Bearbeitungswerkzeug rotierend anzutreiben, wobei die Durchführung (3) ein erstes Lager (10), das die erste Antriebswelle lagern kann, aufweist, **dadurch gekennzeichnet, dass** das System (1) außerdem einen Adapter (14) umfasst, der in die Durchführung (3) einsetzbar ist und der mit einem zweiten Lager ausgestattet ist, das die zweite Antriebswelle (7) lagern kann, wobei der Adapter (14) in das erste Lager (10) einsetzbar ist.

2. System (1) nach Anspruch 1, **dadurch gekennzeichnet, dass** die Durchführung (3) ein Hohlstutzen ist, durch den die erste oder die zweite Antriebswelle (6) verlaufen kann.

3. System (1) nach einem der vorherigen Ansprüche, **dadurch gekennzeichnet, dass** die Durchführung (3) Teil des Zubereitungsbehälters (2) ist.

4. System (1) nach Anspruch 3, **dadurch gekennzeichnet, dass** die Durchführung (3) und der Zubereitungsbehälter (2) einstückig gebildet sind.

5. System (1) nach einem der vorherigen Ansprüche, **dadurch gekennzeichnet, dass** die Durchführung (3) auf der Seite, die bei Betrieb dem Bearbeitungswerkzeug zugewandt ist, einen Aufsatz (5) aufweist, auf dem ein Zahnkranz (6) ausgebildet ist.

6. System (1) nach einem der vorherigen Ansprüche, **dadurch gekennzeichnet, dass** der Lagerdurchmesser des zweiten Lagers kleiner ist als der Lagerdurchmesser des ersten Lagers (10).

7. System (1) nach einem der vorherigen Ansprüche, **dadurch gekennzeichnet, dass** mindestens eines der Lager, vorzugsweise beide Lager als Radiallager ausgebildet sind.

8. System (1) nach einem der vorherigen Ansprüche, **dadurch gekennzeichnet, dass** wenigstens eines, vorzugsweise beide Lager als Gleitlager ausgebildet sind.

9. System (1) nach einem der vorherigen Ansprüche, **dadurch gekennzeichnet, dass** mindestens eines der Lager mit mindestens einer Nut (15) versehen ist, durch die ein radial von der Antriebswelle (7) abstehender Zapfen (9) geführt werden kann.

10. System (1) nach einem der vorherigen Ansprüche, **dadurch gekennzeichnet, dass** der Adapter (14) zwei Adapterteile (12, 13) umfasst, die eine Fixiereinrichtung (11) der Durchführung (3) zwischen sich einschließen können, um den Adapter (14) in der Durchführung (3) zu fixieren.

11. System (1) nach Anspruch 10, **dadurch gekennzeichnet, dass** eines (12) der beiden Adapterteile von der einen Seite der Durchführung (3) und das andere (13) von der anderen Seite derselben (3) aus an die Fixiereinrichtung (11) anbringbar ist, um die Fixiereinrichtung (11) zwischen den Adapterteilen (12, 13) einzuschließen.

12. System(1) nach einem der Ansprüche 10 oder 11, **dadurch gekennzeichnet, dass** die Adapterteile (12, 13) Elemente eines Bayonettverschlusses, eines Schraubverschlusses oder eines Schnappverschlusses umfassen, um die Adapterteile (12, 13) miteinander zu verbinden.

13. System (1) nach einem der vorherigen Ansprüche, **dadurch gekennzeichnet, dass** es eine erste Antriebswelle umfasst, die in dem ersten Lager (10) so gelagert werden kann, dass sie durch die Durchführung (3) in den Zubereitungsbehälter (2) hineinragt.

14. System (1) nach einem der vorherigen Ansprüche, **dadurch gekennzeichnet, dass** es eine zweite Antriebswelle (7) umfasst, die bei in die Durchführung (3) eingesetztem Adapter (14) in dem zweiten Lager so gelagert werden kann, dass sie durch die Durchführung (3) in den Zubereitungsbehälter (2) hineinragt.

## Claims

1. System (1) for the alternative support of a first or a second drive shaft (7) used to rotationally drive a processing tool of a food processor, particularly for preparing foods, comprising a passage (3) through which the first or the second drive shaft (6) can protrude from the outside into a preparation container (2) of the food processor in order to drive the processing tool in a rotating manner, wherein the passage (3) comprises a first bearing (10), which can support the first drive shaft, **characterised in that** the system (1) additionally comprises an adapter (14), which can be inserted into the passage (3) and is equipped with a second bearing which can support the second drive shaft (7), wherein the adapter (14) can be inserted into the first bearing (10).

2. System (1) according to claim 1, **characterised in that** the passage (3) is a hollow stub through which the first or the second drive shaft (6) can pass.

3. System (1) according to one of the preceding claims, **characterised in that** the passage (3) forms part of the preparation container (2).

4. System (1) according to claim 3, **characterised in that** the passage (3) and the preparation container (2) are embodied in one piece.

5. System (1) according to one of the preceding claims, **characterised in that** the passage (3) has an attachment (5) on the side which faces the processing tool during operation, on which attachment (5) a ring gear (6) is formed.

6. System (1) according to one of the preceding claims, **characterised in that** the bearing diameter of the second bearing is smaller than the bearing diameter of the first bearing (10).

7. System (1) according to one of the preceding claims, **characterised in that** at least one of the bearings, preferably both bearings, are embodied as radial bearings.

8. System (1) according to one of the preceding claims, **characterised in that** at least one, preferably both bearings, are embodied as sliding bearings.

9. System (1) according to one of the preceding claims, **characterised in that** at least one of the bearings is provided with at least one groove (15), through which a pin (9) protruding radially from the drive shaft (7) can be guided.

10. System (1) according to one of the preceding claims, **characterised in that** the adapter (14) has two adapter parts (12, 13), which can enclose a fixing device (11) of the passage (3) between them in order to fix the adapter (14) in the passage (3).

11. System (1) according to claim 10, **characterised in that** one (12) of the two adapter parts can be attached to the fixing device (11) from one side of the passage (3) and the other (13) from the other side of the same (3) so as to enclose the fixing device (11) between the adapter parts (12, 13).

12. System (1) according to one of claims 10 or 11, **characterised in that** the adapter parts (12, 13) include elements of a bayonet fixing, a screw plug or a spring catch seal in order to connect the adapter parts (12, 13) to one another.

13. System (1) according to one of the preceding claims, **characterised in that** it includes a first drive shaft, which can be mounted in the first bearing (10) such that it protrudes through the passage (3) into the preparation container (2).

14. System (1) according to one of the preceding claims, **characterised in that** it includes a second drive shaft (7) which can be mounted in the second bearing in the case of the adapter (14) inserted in the passage (3) such that it protrudes through the passage (3) into the preparation container (2).

## Revendications

1. Système (1) pour le montage alternatif d'un premier ou d'un deuxième arbre d'entraînement (7) destiné à entraîner en rotation un outil de traitement d'un robot ménager, notamment pour préparer des produits alimentaires, avec un passage (3) par lequel le premier ou le deuxième arbre d'entraînement (6) peut pénétrer de l'extérieur dans un bol de préparation (2) du robot ménager pour entraîner en rotation l'outil de traitement, le passage (3) présentant un premier palier (10) qui permet de monter le premier arbre d'entraînement, **caractérisé en ce que** le système (1) comprend en outre un adaptateur (14) qui peut être installé dans le passage (3) et qui est équipé d'un deuxième palier qui permet de monter le deuxième arbre d'entraînement (7), l'adaptateur (14) pouvant être installé dans le premier palier (10).

2. Système (1) selon la revendication 1, **caractérisé en ce que** le passage (3) est une tubulure creuse par laquelle le premier ou le deuxième arbre d'entraînement (6) peut passer.

3. Système (1) selon l'une des revendications précédentes, **caractérisé en ce que** le passage (3) fait partie du bol de préparation (2).

4. Système (1) selon la revendication 3, **caractérisé en ce que** le passage (3) et le bol de préparation (2) sont formés d'une seule pièce.

5. Système (1) selon l'une des revendications précédentes, **caractérisé en ce que** le passage (3) présente sur le côté orienté en fonctionnement vers l'outil de traitement un embout (5) sur lequel est réalisée une couronne dentée (6).

6. Système (1) selon l'une des revendications précédentes, **caractérisé en ce que** le diamètre de palier du deuxième palier est plus petit que le diamètre de palier du premier palier (10).

7. Système (1) selon l'une des revendications précédentes, **caractérisé en ce qu'**au moins un des paliers, de préférence les deux paliers sont réalisés sous forme de palier radial.

8. Système (1) selon l'une des revendications précédentes, **caractérisé en ce qu'**au moins un des paliers, de préférence les deux paliers sont réalisés sous forme de palier lisse.

9. Système (1) selon l'une des revendications précédentes, **caractérisé en ce qu'**au moins un des paliers est muni d'au moins une rainure (15) dans laquelle peut être guidé un tenon (9) dépassant radialement de l'arbre d'entraînement (7).

10. Système (1) selon l'une des revendications précédentes, **caractérisé en ce que** l'adaptateur (14) comporte deux parties d'adaptateur (12, 13) qui sont susceptibles de renfermer entre elles un moyen de fixation (11) du passage (3) pour fixer l'adaptateur (14) dans le passage (3).

11. Système (1) selon la revendication 10, **caractérisé en ce que** l'une (12) des deux parties d'adaptateur peut être montée depuis un côté du passage (3) et l'autre depuis l'autre côté du passage (3) sur le moyen de fixation (11) pour renfermer le moyen de fixation (11) entre les parties d'adaptateur (12, 13).

12. Système (1) selon l'une des revendications 10 ou 11, **caractérisé en ce que** les parties d'adaptateur (12, 13) comportent des éléments d'une fermeture à baïonnette, d'une fermeture à vis ou d'une fermeture à encliquetage pour solidariser les parties d'adaptateur (12, 13).

13. Système (1) selon l'une des revendications précédentes, **caractérisé en ce qu'**il comprend un premier arbre d'entraînement qui peut être monté dans le premier palier (10) de façon à pénétrer à travers le passage (3) dans le bol de préparation (2).

14. Système (1) selon l'une des revendications précédentes, **caractérisé en ce qu'**il comprend un deuxième arbre d'entraînement (7) qui, lorsque l'adaptateur (14) est installé dans le passage (3), peut être monté dans le deuxième palier de façon à pénétrer à travers le passage (3) dans le bol de préparation (2).
